# EUROPEAN PATENT SPECIFICATION

(11) **EP 0 800 988 B1**
(45) Date of publication and mention of the grant of the patent: **27.12.2000**
(21) Application number: 97105875.5
(22) Date of filing: 10.04.1997
(51) Int. Cl.: B62M 23/02

(54) **Bicycle with electric drive mechanism**
Fahrrad mit elektrischem Antriebsmechanismus
Bicyclette avec mécanisme d'entraînement électrique

(30) Priority: 12.04.1996 JP 11540596
(43) Date of publication of application: 15.10.1997
(73) Proprietor: MATSUSHITA ELECTRIC INDUSTRIAL CO., LTD., Kadoma-shi, Osaka-fu, 571 (JP)
(72) Inventor: Ueda, Takemi, Suita-shi, Osaka-fu (JP); Wada, Masami, Takefu-shi, Fukui-ken (JP); Miyawaki, Toshiharu, Takefu-shi, Fukui-ken (JP); Kamada, Yasushi, Takefu-shi, Fukui-ken (JP)
(74) Representative: Eisenführ, Speiser & Partner

(56) References cited:
- EP-A- 0 636 537
- DE-A- 2 218 730

## Description

### FIELD OF THE INVENTION

The invention relates to a bicycle which includes a conventional pedal drive mechanism and an electric drive mechanism, in which a load applied to pedals is in part borne and reduced by the electric drive mechanism according to a speed of the bicycle, as disclosed in EP-A-0 636 537, which discloses the features of the preamble of Claim 1.

### BACKGROUND OF THE INVENTION

There has been proposed an electric bicycle which has an electric drive mechanism as well as a conventional pedal drive means for reducing a load to be applied on pedals to a certain extent, depending upon the load. For example, the bicycle is designed that, for cycling speeds of 0-15 kilometers per hour, 50 percent of the load is covered by an electric motor and, for cycling speed of 15 to 24 kilometers per hour, a ratio of the load coverage by the electric motor is decreased from 50 to zero percent depending upon the cycling speed.

For this purpose, the electric drive mechanism generally includes a first detector for detecting a load applied on pedals, a second detector for detecting a rotational speed of the pedals, an electric motor, a speed reducer, an electric controller, and a rechargeable battery as an electric power source. With this arrangement, the electric motor is controlled by the electric controller according to information from the torque and speed detectors, so that the load on the pedals is in part borne by the electric drive mechanism as described above (see EP-A-0 636 537).

Disadvantageously, however, those elements, i.e., motor, reducer, battery, etc., are mounted separately around seat and down tubes, not integrally, and therefore they should be waterproofed individually. Besides, the elements are enclosed to prevent them from being damaged with a cover, for example, made of plastic material, together with wire harnesses each connecting one element to the other element.

Consequently, the electric bicycle has an increased weight of about 28 to 30 kilograms which is considerably heavier than a conventional non-electric bicycle by about 10 to 15 kilo-grams, thereby decreasing both handling and assembling thereof.

Further, the elements, i.e., motor, reducer, and controller, are not integrated as a unit and therefore they should be mounted individually, which results in a complicated assembling.

Furthermore, once the electric driving mechanism is energized, the elements, such as, motor and controller, will have increased temperatures. On the other hand, they can be cooled down by the rain or the splashed water. This results in a disadvantageous contraction and expansion of the air in a housing of the element. Therefore, it is desirable that each housing of the elements includes a breathing means, or an opening, for keeping the pressure in the housing constant. The breathing means, however, can draw the water into the housing when it contracts. Therefore, a position of the opening to be formed in the housing should be carefully selected.

Moreover, in the conventional arrangement, the elements are mounted separately as described above, and therefore they should have individual breathing means, which requires a large space for mounting the breathing means.

### SUMMARY OF THE INVENTION

Accordingly, an object of the invention is to overcome such problems and thereby provides a suitable electric bicycle.

A bicycle of the invention comprises the features of Claim 1.

### BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:
Fig. 1 is a side elevational view of a bicycle of the invention;
Fig. 2 is a cut-away side elevational view of an electric drive unit of the bicycle;
Fig. 3 is a sectional view of the electric drive unit, taken along an imaginary line connecting several points A to F in Fig. 2;
Fig. 4 is a cut-away side elevational view of the electric drive unit of the bicycle;
Fig. 5 is a cut-away side elevational view of a breathing tube; and
Fig. 6 is a cut-away side elevational view of the electric drive unit in which the breathing tube is arranged in a seat tube of the bicycle.

### PREFERRED EMBODIMENT OF THE INVENTION

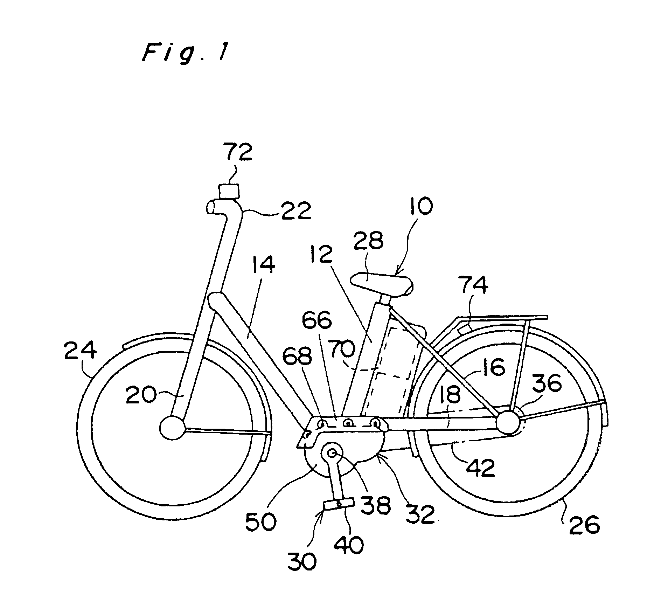

With reference to the drawing, there is shown in Fig. 1 a bicycle of the invention, generally indicated by reference numeral 10. The bicycle 10 includes several framing tubes, such as, seat and down tubes 12 and 14, seat and chain stays 16 and 18, a fork 20, and handlebars 22, front and rear wheels 24 and 26, and a saddle 28.

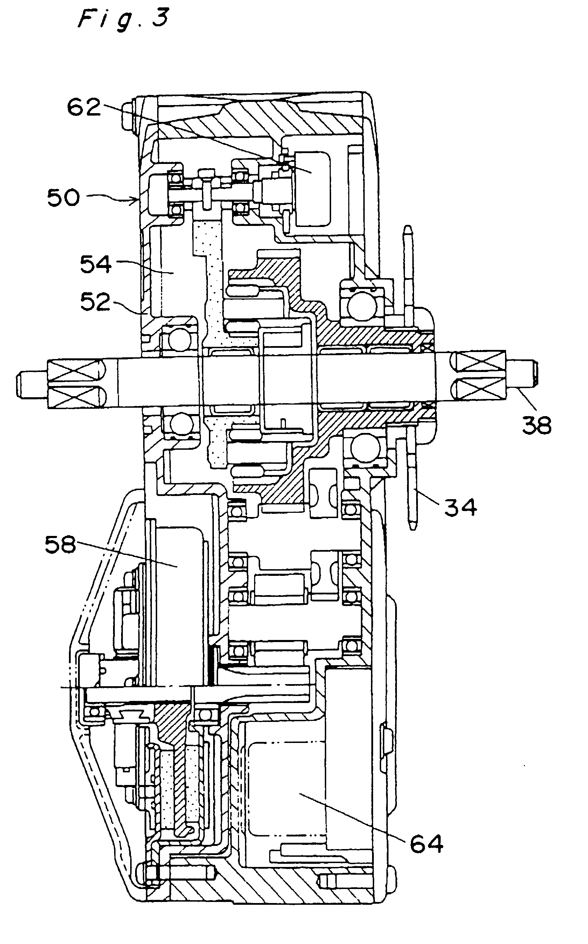

The bicycle 10 has a pedal drive mechanism 30 and an electric drive mechanism 32. The pedal drive mechanism 30 includes a front sprocket 34 (see Fig. 3), and a rear sprocket 36. The front sprocket 34 is secured on a rotatable crank shaft 38 rotatably and horizontally supported at an intersection of the seat and down tubes 12 and 14. The crank shaft 38 also has pedals 40 at its opposite ends. The rear sprocket 36 is supported coaxially with the rear wheel 26. Entrained about the front sprocket 34 and rear sprocket 36 is an endless drive chain 42 so that a rotational force applied on the pedals 40 is transmitted to crank shaft 38, front sprocket 34, drive chain 42, rear sprocket 36, and rear wheel 26 sequentially, providing the bicycle 10 with a forward movement for cycling.

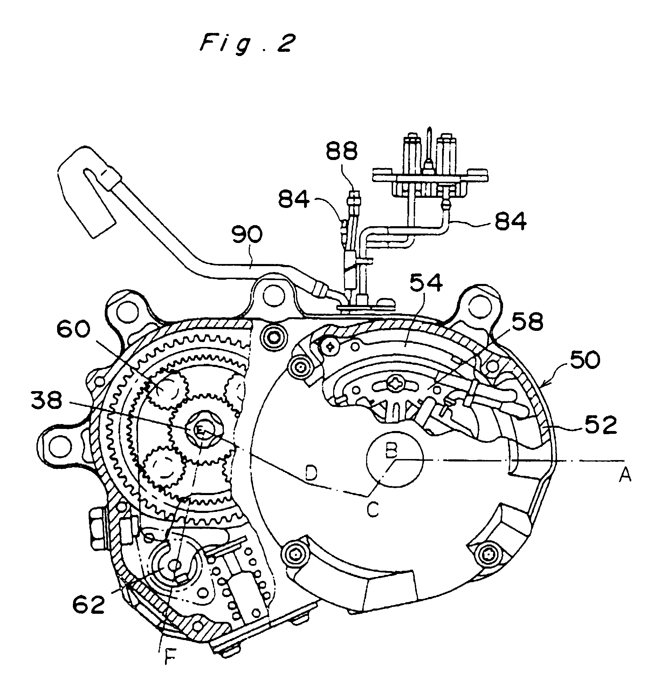

Referring to Figs. 1, 2, and 3, the electric drive mechanism 32 comprises a drive unit generally indicated by reference numeral 50. The drive unit 50 has an airtight housing 52 in which a chamber 54 is formed. The chamber 54 accommodates various electrical and mechanical elements, i.e., a motor 58 for rotating the crank shaft 38, a speed reducer 60 for reducing a rotational speed of the motor 58 and then transmitting the reduced rotation to the crank shaft 38, a sensor 62 for sensing both a load applied on the pedals 40 and a rotational speed of the crank shaft 38, and a control circuit 64 having a microcomputer for controlling the motor 58.

As best shown in Fig. 1, the drive unit 50 is preferably mounted adjacent and/or below a connector 66 for connecting between the seat and down tubes 12 and 14 using a plurality of securing means, such as, screws 68. The drive unit 50 has several advantages. For example, the electric drive mechanism 32 can be readily assembled on the bicycle 10. Also, the bicycle 10 has a gravitational center at its lower and central portion thereof, providing a stable maneuverability of the bicycle 10.

Referring back to Fig. 1, the electric drive mechanism 32 also includes a battery 20, preferably a rechargeable battery, for supplying an electric power to the motor 58, a display 72 for displaying an operational state of the electric drive mechanism, and a switch 22 for energizing and de-energizing the motor 58. In this preferred embodiment, battery 70, display 72, and switch 74 are mounted adjacent the seat tube 12, handlebar 22, rear wheel 74, respectively, however, they may be arranged at different positions.

In operation of the electric drive mechanism 32, once the crank shaft 38 is rotated by applying rotational force on the pedals 40, the sensor 62 senses both load applied on the pedals 40 and rotational speed of the crank shaft 38, thereupon the microcomputer in the control circuit 64 determines an output of the motor 58. The output of the motor 58 is transmitted through the reducer 60 to the crankshaft 38, thereby bearing a part of the load applied on the pedals 40.

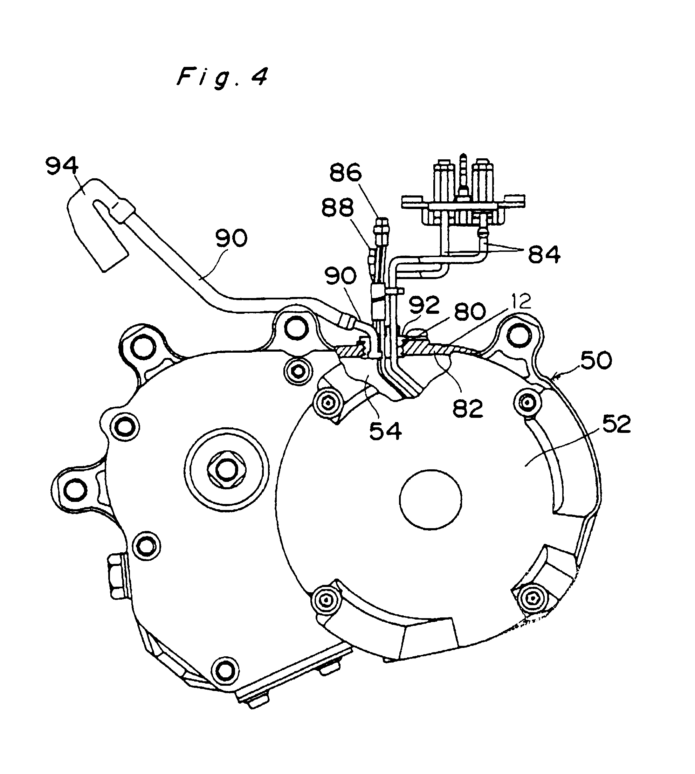

Referring to Fig. 4, the housing 52 of the drive unit 50 has an opening, or through-hole 80, in its upper wall 82, through which various wire-harnesses 84, 86, and 88 are extended out from the housing 52 for electrically connecting battery 70, display 22, and switch 74 with associated elements in the housing 52, respectively. Also, extended out through the through-hole 80 is a breathing tube 90 for fluidly communicating the chamber 54 of the housing 50 with the atmosphere, thereby keeping the pressure of the chamber 54 constant. The through-hole 80 includes a waterproof seal 92, preferably made of rubber, for sealing around the wire-harnesses 84, 86, and 88 and the breathing tube 90.

Referring to Figs. 4, 5, and 6, the breathing tube 90 has a distal end and a proximal end. The proximal end is secured at the through-hole 80, while the distal end is connected with a guide tube 94 preferably made of elastic material.

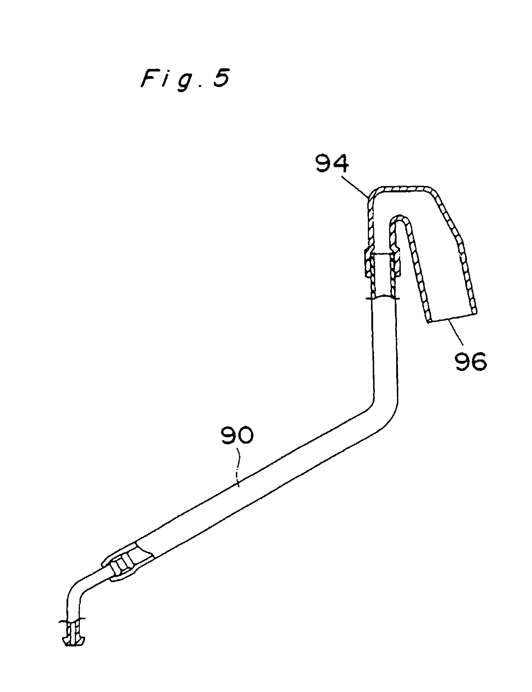

As best shown in Fig. 5, at least an inlet portion 96 of the guide tube 94 has an inner diameter of eight millimeters or more so that no water screen is formed at the inlet portion 96, while the rest of it has a reduced diameter for reducing a space required for mounting the breathing tube 90 to the housing 50 and further for assembling the unit 50 on the bicycle 10.

More preferably, the guide tube 94 is in the form of "U" or "J" with its inlet portion 96 directed downward, which advantageously preventing water, for example, splashed water, from entering into the housing 52 through the breathing tube 90.

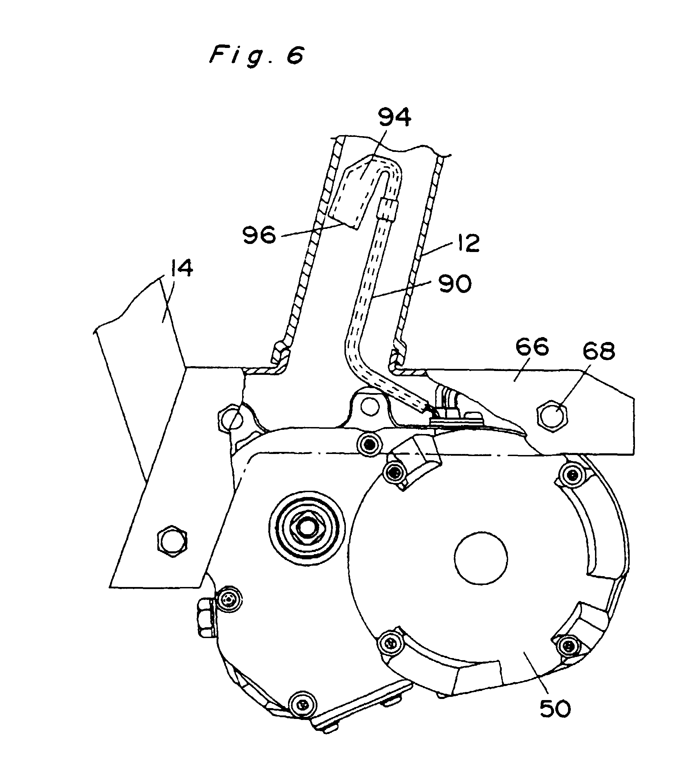

Most preferably, as shown in Fig. 6, breathing tube 90 with the guide tube 94 is arranged in the seat tube 12 with the inlet portion 96 of the guide tube 96 directed downward. In this instance, the drive unit 50 is preferably connected the connector 66. Also, the breathing tube 90 can be settled due to its elastic feature without using a specific fixing means. It will be appreciated that the breathing tube 90 in this improvement can also communicate the chamber 54 of the housing 52 with the atmosphere.

Note that the breathing tube 90 may be adopted in the conventional electric bicycle in which the motor, reducer, sensor, and controlling circuit are arranged separately. In this instance, a plurality of breathing tubes may be connected at their one ends with respective elements while the other ends thereof are arranged in the framing tubes.

Although the breathing tube is arranged in the seat tube, it may be inserted in the down tube.

In conclusion, according to the electric bicycle of the invention, motor, reducer, sensor, and controlling circuit are integrated in the housing mounted adjacent and/or below the central portion of the bicycle, thereby the bicycle is well-balanced with respect to a front and rear direction and has a lower gravitational center.

Also, the invention provides the bicycle that can be easily assembled and handled.

Further, the wire harnesses electrically connecting the drive unit with the battery, switch, and display are extended out though the waterproof sealing. Therefore, no water is penetrated into the housing of the drive unit. Also, the wire harnesses can be easily incorporated in the drive unit.

Furthermore, the interior of the drive unit is fluidly communicated with the atmosphere by the breathing tube connected through the water proof structure at the through-hole through which the wire harnesses are also extended out from the housing. In addition, the other end of the breathing tube is connected with the guide tube having a specific structure that can prevent a formation of the water screen. Consequently, no water is admitted into the housing of the drive unit through the breathing tube.

Moreover, arranging the breathing tube in the framing tubes, for example, seat tube, will not compromise an appearance of the bicycle. Also, the breathing tube in the framing tube can be settled due to its flexibility.

The present invention has now been described with reference to several embodiments thereof. It will be apparent to those skilled in the art that many changes can be made in the embodiments described without departing from the scope of the invention. Thus, the scope of the present invention should not be limited to the structures described herein, but only by structures described by the language of the claims and the equivalents of the those structures.

## Claims

1. A bicycle (10) having a pedal drive mechanism (30) and an electric drive mechanism (32) capable of bearing in part a load of applied on pedals (40), said electric drive mechanism (32) including a motor (58), a detector (62)for detecting a load on the pedals (40)and a rotational speed thereof, a speed reducer (60) for reducing a rotational speed of said motor (58), a controlling circuit (64), a battery (70) for supplying an electric power to said motor (58), a switch (74) for energizing said motor (58), comprising:
a housing (52), having a chamber (54) for integrally accommodating said motor (58), detector (62), speed reducer (60), and controlling circuit (64), and
a plurality of wire harnesses (84) for connecting said battery (70) and said switch (74) with associated elements in said housing (52);
**characterized by** a through-hole (80) mounted at an upper portion of said housing (52) for fluidly communicating said chamber (54) with the atmosphere, wherein said wire hardnesses (84) extend through said through-hole (80),
a waterproof seal (80) for sealing said through-hole (80), and
a breathing tube (90) having a first end fluidly communicated with said chamber (54) through said through-hole (80) and a second end fluidly communicated with the atmosphere.

2. A bicycle claimed in claim 1, wherein said breathing tube (90) is extended upward, and said second end of said breathing tube (90) is connected with a guide tube (94) having a distal end directed downward.

3. A bicycle claimed in claim 2, wherein said guide tube (94) is in the form of U.

4. A bicycle claimed in claim 2, wherein said guide tube (94) is made of elastic material.

5. A bicycle claimed in one of said claims 2 to 4, wherein said distal end of said guide tube (94) has a diameter of eight millimeters or more to prevent a water screen from being formed at said distal end.

6. A bicycle claimed in claim 2, wherein said breathing tube (90) is arranged in a framing tube of said bicycle.

7. A bicycle (10) having a pedal drive mechanism (30) and an electric drive mechanism (32) capable of bearing in part a load to be applied on pedals (40), comprising:
said electric drive mechanism (32) includes a motor (58), a detector (62) for detecting a load on the pedals (40) and a rotational speed thereof, a speed reducer (60) for reducing a rotational speed of said motor (58), a controlling circuit (64), a battery (70) for supplying an electric power to said motor (58), a switch (74) for energizing said motor (58);
a housing (52) having a chamber (54) for integrally accommodating said motor (58), detector (62), speed reducer (60), and controlling circuit (64), and an through-hole (80) formed at an upper portion of said housing (52) for fluidly communicating said chamber (54) with the atmosphere;
a plurality of wire harnesses (84) extended through said through-hole (80) for connecting said battery (70) and said switch (74) with associated elements in said housing (52);
a breathing tube (90) having a first end fluidly communicated with said chamber (54) and a second end fluidly communicated with the atmosphere;
a guide tube (94) connected at said second end of said breathing tube (90), said guide tube having a distal end directed downward; and
a waterproof seal (80) packed around said plurality of harnesses (84) and said breathing tube (90) at said through-hole to close said through-hole (80).

8. A bicycle claimed in claim 7, wherein said breathing tube (90) is extended through said through-hole (80).

## Patentansprüche

1. Fahrrad (10) mit einem Pedalantrieb (30) und einem elektrischen Antrieb (32), der die auf die Pedale (40) aufgebrachte Last teilweise übernehmen kann, welcher elektrische Antrieb (32) einen Motor (58), einen Detektor (62) zum Feststellen der Last und der Drehzahl an den Pedalen (40), ein Untersetzungsgetriebe (60) zum Verringern der Drehzahl des Motors (58), eine Steuerschaltung (64), eine Batterie (70) zum Speisen des Motors (58) mit elektrischem Strom und einen Schalter (74) zum Inbetriebsetzen des Motors (58) enthält,
mit einem Gehäuse (52) mit einer Kammer (54) zur integralen Anordnung von Motor (58), Detektor (62), Untersetzungsgetriebe (60) und Steuerschaltung (64) und
mit einer Mehrzahl von Kabelbäumen (84) zum Verbinden von Batterie (70) und Schalter (74) mit den zugeordneten Elementen in dem Gehäuse (52), gekennzeichnet durch eine durchgehende Öffnung (80) in einem oberen Abschnitt des genannten Gehäuses (52) als Fluidverbindung der Kammer (54) mit der Umgebungsluft, wobei die Kabelbäume (84) sich durch die Öffnung (80) erstrecken,
eine wasserdichte Dichtung (92) zum Abdichten der Öffnung (80) und
ein Entlüftungsrohr (90), bei dem ein erstes Ende eine Fluidverbindung mit der Kammer (54) durch die Öffnung (80) schafft und bei dem ein zweites Ende eine Fluidverbindung mit der Umgebungsluft schafft.

2. Fahrrad nach Anspruch 1, bei dem sich das genannte Entlüftungsrohr (90) nach oben erstreckt und das zweite Ende des Entlüftungsrohres (90) mit einem Luftführungsrohr (94) verbunden ist, dessen äußeres Ende nach unten gerichtet ist.

3. Fahrrad nach Anspruch 2, bei dem das genannte Luftführungsrohr (94) U-förmig ausgebildet ist.

4. Fahrrad nach Anspruch 2, bei dem das genannte Luftführungsrohr (94) aus einem elastischen Material hergestellt ist.

5. Fahrrad nach einem der Ansprüche 2 bis 4, bei dem das äußere Ende des Luftführungsrohres (94) einen Durchmesser von acht Millimetern oder mehr aufweist, um zu verhindern, dass sich an dem genannten äußeren Ende ein Wasserfilm bildet.

6. Fahrrad nach Anspruch 2, bei dem das genannte Entlüftungsrohr (90) in einem Rahmenrohr des Fahrrades angeordnet ist.

7. Fahrrad (10) mit einem Pedalantrieb (30) und einem elektrischen Antrieb (32), der die auf die Pedale (40) aufgebrachte Last teilweise übernehmen kann, wobei
der elektrische Antrieb (32) einen Motor (58), einen Detektor (62) zum Feststellen der auf die Pedale (40) wirkenden Last und der Drehzahl der Pedale, ein Untersetzungsgetriebe (60) zum Verringern der Drehzahl des Motors (58), eine Steuerschaltung (64), eine Batterie (70) zum Speisen des Motors (58) mit elektrischem Strom und einen Schalter (74) zum Inbetriebsetzen des Motors (58) enthält,
das Fahrrad ein Gehäuse (52) aufweist mit einer Kammer (54) zur integralen Anordnung des genannten Motors (58), Detektors (62), Untersetzungsgetriebes (60) und der Steuerschaltung (64) und eine durchgehende Öffnung (80) in einem oberen Abschnitt des genannten Gehäuses (52) als Fluidverbindung der Kammer (54) mit der Umgebungsluft vorgesehen ist,
eine Mehrzahl von Kabelbäumen (84) aufweist, die sich durch die genannte Öffnung (80) zur Verbindung von Batterie (70) und Schalter (74) mit zugeordneten Elementen in dem Gehäuse (52) erstreckt,
ein Entlüftungsrohr (90) aufweist, dessen erstes Ende eine Fluidverbindung mit der genannten Kammer (54) bildet und dessen zweites Ende eine Fluidverbindung mit der Umgebungsluft bildet,
ein Luftführungsrohr (94) aufweist, das mit dem genannten zweiten Ende des Entlüftungsrohres (90) verbunden ist und von dem ein äußeres Ende nach unten gerichtet ist, und
eine wasserdichte Dichtung (92) aufweist, die um die genannte Mehrzahl von Kabelbäumen (84) und das Entlüftungsrohr (90) an der genannten Öffnung herum als Verschluss der Öffnung (80) angeordnet ist.

8. Fahrrad nach Anspruch 7, bei dem sich das genannte Entlüftungsrohr (90) durch die genannte Öffnung (80) erstreckt.

## Revendications

1. Bicyclette (10) comportant un mécanisme d'entraînement à pédales (30) et un mécanisme d'entraînement électrique (32) capable de supporter en partie une charge devant être appliquée sur des pédales (40), ledit mécanisme d'entraînement électrique (32) comprenant un moteur (58), un détecteur (62) destiné à détecter une charge sur les pédales (40) et une vitesse de rotation de celles-ci, un réducteur de vitesse (60) destiné à réduire une vitesse de rotation dudit moteur (58), un circuit de commande (64), une batterie (70) destinée à fournir une alimentation électrique audit moteur (58), un commutateur (74) destiné à activer ledit moteur (58), comprenant :
un boîtier (52) comportant une chambre (54) destinée à recevoir de façon intégrée lesdits moteur (58), détecteur (62), réducteur de vitesse (60) et circuit de commande (64), et
une pluralité de faisceaux de câbles (84) destinés à relier ladite batterie (70) et ledit commutateur (74) à des éléments associés dans ledit boîtier (52),
caractérisée par un trou débouchant (80) monté à une partie supérieure dudit boîtier (52) destiné à mettre en communication de fluide ladite chambre (54) et l'atmosphère, dans lequel lesdits faisceaux de câbles (84) s'étendent au travers dudit trou débouchant (80),
un joint étanche à l'eau (80) destiné à assurer l'étanchéité dudit trou débouchant (80), et
un reniflard (90) ayant une première extrémité mise en communication de fluide avec ladite chambre (54) par l'intermédiaire dudit trou débouchant (80) et une seconde extrémité mise en communication de fluide avec l'atmosphère.

2. Bicyclette selon la revendication 1, dans laquelle ledit reniflard (90) s'étend vers le haut, et ladite seconde extrémité dudit reniflard (90) est raccordée à un tube de guidage (94) présentant une extrémité éloignée orientée vers le bas.

3. Bicyclette selon la revendication 2, dans laquelle ledit tube de guidage (94) est en forme de U.

4. Bicyclette selon la revendication 2, dans laquelle ledit tube de guidage (94) est fait d'un matériau élastique.

5. Bicyclette selon l'une desdites revendications 2 à 4, dans'laquelle ladite extrémité éloignée dudit tube de guidage (94) présente un diamètre de huit millimètres ou plus pour i empêcher un écran d'eau de se former au niveau de ladite extrémité éloignée.

6. Bicyclette selon la revendication 2, dans laquelle ledit reniflard (90) est disposé dans un tube de cadre de ladite bicyclette.

7. Bicyclette (10) comportant un mécanisme d'entraînement à pédales (30) et un mécanisme d'entraînement électrique (32) capable de supporter en partie une charge devant être appliquée sur les pédales (40), comprenant :
ledit mécanisme d'entraînement électrique (32) qui comprend un moteur (58), un détecteur (62) destiné à détecter une charge sur les pédales (40) et une vitesse de rotation de celles-ci, un réducteur de vitesse (60) destiné à réduire une vitesse de rotation dudit moteur (58), un circuit de commande (64), une batterie (70) destinée à fournir une alimentation électrique audit moteur (58), un commutateur (74) destiné à activer ledit moteur (58),
un boîtier (52) comportant une chambre (54) destinée à recevoir de façon intégrée lesdits moteur (58), détecteur (62), réducteur de vitesse (60) et circuit de commande (64), de même qu'un trou débouchant (80) formé au niveau d'une partie supérieure dudit boîtier (52) destiné à mettre en communication de fluide ladite chambre (54) avec l'atmosphère,
une pluralité de faisceaux de câbles (84) étendus au travers dudit trou débouchant (80) destinés à relier ladite batterie (70) et ledit commutateur (74) à des éléments associés dans ledit boîtier (52),
un reniflard (90) ayant une première extrémité mise en communication de fluide avec ladite chambre (54) et une seconde extrémité mise en communication de fluide avec l'atmosphère,
un tube de guidage (94) relié à ladite seconde extrémité dudit reniflard (90), ledit tube de guidage présentant une extrémité éloignée dirigée vers le bas, et
un joint étanche à l'eau (80) serré autour de ladite pluralité de faisceaux (84) et dudit reniflard (90) au niveau dudit trou débouchant pour fermer ledit trou débouchant (80).

8. Bicyclette selon la revendication 7, dans laquelle ledit reniflard (90) passe au travers dudit trou débouchant (80).
